# EUROPÄISCHE PATENTSCHRIFT

(11) **EP 2 522 471 B1**
(45) Veröffentlichungstag und Bekanntmachung des Hinweises auf die Patenterteilung: **18.06.2014**
(21) Anmeldenummer: 11166023.9
(22) Anmeldetag: 13.05.2011
(51) Int. Cl.: B25J 15/06, B65G 47/91, B65H 3/08

(54) **Handhabungsvorrichtung und Verfahren zum Anheben eines plattenförmigen Werkstücks**
Handling device and method for lifting a board-shaped workpiece
Dispositif de manipulation et procédé de levée d'une pièce en forme de plaque

(43) Veröffentlichungstag der Anmeldung: 14.11.2012
(73) Patentinhaber: Bargstedt Handlingsysteme GmbH, 21745 Hemmoor (DE)
(72) Erfinder: Trucewitz, Nils, 21739 Dollern (DE)
(74) Vertreter: HOFFMANN EITLE

(56) Entgegenhaltungen:
- DE-A1- 10 140 248
- DE-A1- 19 817 426
- DE-A1-102009 021 538
- DE-B3-102006 023 298
- DE-T5-112007 001 617
- US-A- 6 024 392

## Beschreibung

### TECHNISCHES GEBIET

Die Erfindung betrifft eine Handhabungsvorrichtung zum Anheben eines plattenförmigen Werkstücks, welches bevorzugt zumindest abschnittsweise aus Holz, Holzwerkstoffen oder Kunststoff besteht. Die Vorrichtung umfasst zumindest einen Sauger, der zum Ansaugen und Anheben des Werkstücks ausgestaltet ist, zumindest eine Unterdruckquelle, die durch Bereitstellen einer Unterdruckleistung einen Unterdruck in dem Sauger zum Ansaugen des Werkstücks erzeugt, und zumindest einen Druckmesser zum Messen des Unterdrucks in dem Sauger.

Ferner betrifft die Erfindung ein Verfahren zum Anheben eines plattenförmigen Werkstücks, welches bevorzugt zumindest abschnittsweise aus Holz, Holzwerkstoffen oder Kunststoff besteht. Schließlich betrifft die Erfindung ein Computerprogramm, das einen Computer zur Ausführung eines solchen Verfahrens bringt.

### STAND DER TECHNIK

Im Stand der Technik sind Handhabungsvorrichtungen grundsätzlich bekannt. Sie werden beispielsweise dazu benutzt, in Lagerräumen in unterschiedlichen Stapeln gelagerte plattenförmige Werkstücke unterschiedlicher Geometrien und Materialien zu lagern, zu sortieren, zu verwalten und bei Bedarf einem Bestimmungsort zuzuführen, an dem die Werkstücke beispielsweise weiterverarbeitet werden.

Die Werkstücke werden dabei durch eine Bearbeitungsvorrichtung angehoben, die üblicherweise eine Anhebevorrichtung, beispielsweise in Form eines Saugers, aufweist.

Beim Anheben von gestapelten plattenförmigen Werkstücken tritt oft das Problem auf, dass aufeinanderliegende Werkstücke aneinanderhaften und sich beim Anheben nicht sofort voneinander lösen. Dieses Problem führt dazu, dass teilweise statt eines Werkstücks zwei oder mehr Werkstücke angehoben und zumindest teilweise transportiert werden. Hierbei kann sich während des Transports ein Werkstück lösen und beim Aufprall beschädigt werden. Darüber hinaus ist der Bestimmungsort des Werkstücks nicht immer zur Aufnahme von mehreren Werkstücken geeignet. Aus diesen Gründen besteht bei herkömmlichen Handhabungsvorrichtungen das Problem, dass es zu Verzögerungen oder zum Stillstand in der Prozesskette kommen kann oder die geplante Lagerordnung durch versehentliches Umsetzen einzelner Werkstücke durcheinander gebracht wird. Dies kann zu erheblichen Verzögerungen bei der Verwaltung der Werkstücke und damit zu zusätzlichen Kosten führen.

In der DE 10 2009 021 538 Al wird eine Vorrichtung beschrieben, bei der eine Vorgabeeinrichtung mindestens einen Soll-Handhabungsparameter für die Anhebevorrichtung vorgibt, der einem ersten Satz Umweltparameter zugeordnet ist. Auf diese Weise werden Erfahrungswerte für die Handhabungsvorrichtung und für die durch sie auf die Werkstücke wirkende Kraft in Abhängigkeit der Umgebungssituation vorgegeben, um insbesondere bei bekannten Problemen bei der Handhabung der Werkstücke entsprechende Vorkehrungen treffen zu können.

Im Fall von Vakuumsaugern zum Ansaugen und Anheben des Werkstücks ist zu bedenken, dass schwere Werkstücke grundsätzlich eher ein stärkeres Vakuum zum Aufbringen der entsprechenden Haltekraft benötigen, als leichte Werkstücke. Bei durchsaugenden Materialien ist zur Erzeugung eines Vakuums üblicherweise ein höherer Volumenstrom erforderlich als bei völlig luftundurchlässigen Materialien. Welche Eigenschaften bezüglich des Durchsaugens eines Werkstücks vorliegen, hängt nicht nur vom Material selbst ab, sondern auch von dessen Dicke, Struktur und innerem Aufbau an der Position des Vakuumsaugers.

Teilweise wird im Stand der Technik vorgeschlagen, einen im Randbereich des Werkstücks angeordneten äußeren Sauger im Vergleich zu weiter innen liegenden Saugern etwas anzuheben, dadurch das Werkstück aufzubiegen und den Haltekräften zwischen dem aufzunehmenden Werkstück und dem darunterliegenden Werkstück somit entgegenzuwirken.

Bei biegeschlaffen oder stark durchsaugenden Materialien kommt es jedoch immer wieder zu Problemen bei der Handhabung der Werkstücke, indem jeweils ein Werkstück an dem anzuhebenden Werkstück anhaften und sich nicht oder dann während des Transports des Werkstücks hiervon lösen und herabfallen kann.

Aus DE 11 2007 001 617 T5 geht eine Vorrichtung zur Förderung von Blättern für eine Druckmaschine hervor, bei der die Blätter durch Greifer angehoben werden, die mit einer Unterdruckeinheit verbunden sind. Um eine Adhäsion zwischen Blättern im Blattstapel zu verhindern, wird dort vorgeschlagen, eine Überdruckluft gegen die Vorderseite der obersten Blätter im Stapel zu richten, wodurch die Blätter vor dem Anheben und Transport getrennt werden.

DE 101 40 248 A1 offenbart eine Handhabungsvorrichtung für Werkstücke, wobei mehrere Greifer vorgesehen sind, die jeweils mit einer Einrichtung zum Steuern des Unterdrucks und/oder des Volumenstroms, mit einem Sensor zum Erfassen von Zustandsdaten an dem Greifer und mit einer Auswerteelektronik ausgestattet ist, an welche die Einrichtung zum Steuern des Unterdrucks und der Sensor angebunden sind.

### DARSTELLUNG DER ERFINDUNG

Die Aufgabe der vorliegenden Erfindung liegt somit darin, eine gegenüber dem Stand der Technik verbesserte Handhabungsvorrichtung bereitzustellen, mit der die oben beschriebenen Probleme bei der Handhabung plattenförmiger Werkstücke weitgehend überwunden werden. Insbesondere ist es Aufgabe der Erfindung, eine Handhabungsvorrichtung bereitzustellen, mit der verschiedene Materialien sicher verarbeitet und transportiert werden können.

Erfindungsgemäß wird die Aufgabe durch eine Handhabungsvorrichtung nach Anspruch 1, ein Verfahren nach Anspruch 6 und ein Computerprogramm nach Anspruch 9 gelöst.

Eine erfindungsgemäße Handhabungsvorrichtung zum Anheben eines plattenförmigen Werkstücks, welches bevorzugt zumindest abschnittsweise aus Holz, Holzwerkstoffen oder Kunststoff besteht, umfasst zumindest einen Sauger, der zum Ansaugen und Anheben des Werkstücks ausgestaltet ist, zumindest eine Unterdruckquelle, die durch Bereitstellen einer Unterdruckleistung einen Unterdruck in dem Sauger zum Ansaugen des Werkstücks erzeugt, und zumindest einen Druckmesser zum Messen des Unterdrucks in dem Sauger. Die Handhabungsvorrichtung ist dadurch gekennzeichnet, dass sie ferner einen Regelkreis umfasst, der dazu ausgestaltet ist, die Unterdruckleistung in Abhängigkeit von dem Unterdruck in dem Sauger so zu regeln, dass mindestens ein minimaler zum Anheben des Werkstücks ausreichender Unterdruck in dem Sauger erzeugt wird. Bevorzugt wird genau ein minimaler zum Anheben des Werkstücks ausreichender Unterdruck in dem Sauger erzeugt, wobei jedoch auch ein Aufschlag auf den minimal ausreichenden Unterdruck vorgesehen sein kann, der beispielsweise in der Größenordnung von 10% dieses minimal ausreichenden Unterdrucks liegen kann.

Es kann auch vorgesehen sein, für mehrere Hubeinheiten einen gemeinsamen Kraft- oder Drucksensor zu verwenden. Mit anderen Worten kann eine Handhabungsvorrichtung auch mehr als einen Sauger und/oder mehr als eine Unterdruckquelle aber nur einen Druckmesser, in einer bevorzugten Ausführungsform auch noch nur einen Kraftmesser aufweisen. Es können auch Gruppen aus einzelnen Hubeinheiten gebildet werden, die sich einen oder mehrere gemeinsame Kraft- oder Drucksensoren teilen.

Der durch den Druckmesser gemessene Unterdruck "in dem Sauger" kann erfindungsgemäß auch in der Nähe des Saugers gemessen werden, beispielsweise in einer Zuleitung zu dem Sauger, einem Druckgefäß und dergleichen, so dass mit hinreichender Genauigkeit Rückschlüsse auf den in dem Sauger tatsächlich vorliegenden Unterdruck gezogen werden können.

Durch die erfindungsgemäße Handhabungsvorrichtung ist es möglich, die zur Handhabung, insbesondere dem Ansaugen des Werkstücks, nötige Energie zu optimieren, so dass kein unnötig hohes Vakuum in dem Sauger erzeugt werden muss und die hierfür benötigte Energie eingespart werden kann. Vor allem ermöglicht die erfindungsgemäße Handhabungsvorrichtung ein geringes Durchsaugen durch das Werkstück und somit ein geringes Anhaften eines darunterliegenden Werkstücks an dem anzuhebenden Werkstück. Dieser Vorteil ergibt sich daraus, dass durch die Erzeugung des minimalen ausreichenden Unterdrucks in dem Sauger auch der durchsaugende Volumenstrom minimal wird, der unter anderem für das Anhaften eines darunterliegenden Werkstücks an das anzuhebende Werkstück verantwortlich ist. Durch den Regelkreis lässt sich die erfindungsgemäße Handhabungsvorrichtung sehr flexibel einsetzen, so dass die Flexibilität der Vorrichtung hinsichtlich verschiedenster Werkstücke stark erhöht wird.

Die Vorrichtung umfasst ferner einen Kraftmesser, der bevorzugt am Sauger angebracht ist, der dazu angeordnet und ausgestaltet ist, eine durch den Sauger an das Werkstück angelegte Hubkraft zu messen, wobei der Regelkreis dazu ausgestaltet ist, die Unterdruckleistung auch in Abhängigkeit von dieser Hubkraft zu regeln.

Die "Hubkraft" bezeichnet dabei diejenige Kraft, mit der das Werkstück durch den Sauger angehoben wird, nicht diejenige Kraft, die im Sinne einer Kontaktkraft unmittelbar zwischen dem Sauger und dem Werkstück wirkt, um das Werkstück am Sauger zu fixieren. Diese Hubkraft ließe sich beispielsweise aus der Kraft ermitteln, die dazu benötigt wird, den Sauger samt Werkstück anzuheben, wobei die Gewichtskraft des Saugers selbst von dieser Kraft abzuziehen wäre.

Durch den Kraftmesser ist es besonders gut möglich, ein Anhaften eines weiteren Werkstücks an dem eigentlich anzuhebenden Werkstück zu erkennen und entsprechend die Einstellungen des Saugers anzupassen. Insbesondere kann bei Erkennen eines zusätzlich angehobenen Werkstücks die Unterdruckleistung der Unterdruckquelle reduziert werden, um das Durchsaugen durch das Werkstück zu reduzieren und das Anhaften des zusätzlichen Werkstücks somit zu verhindern.

Mit Vorteil umfasst die Vorrichtung ferner einen Antrieb, bevorzugt einen Schrittmotor, der dazu angeordnet und ausgestaltet ist, den Sauger, insbesondere quasi stufenlos, einzeln zu bewegen. Hierbei ist der Regelkreis bevorzugt dazu ausgestaltet, die Unterdruckleistung auch in Abhängigkeit von der Bewegung des Saugers zu regeln.

Durch das einzelne Bewegen eines Saugers im Gegensatz zu anderen Saugern, die dasselbe Werkstück anheben, ist es möglich, das Werkstück an einzelnen Stellen stärker anzuheben als an anderen Stellen, was ebenfalls dazu beitragen kann, das Anhaften eines weiteren Werkstücks an dem anzuhebenden Werkstück zu unterbinden. Die quasi stufenlose Bewegung des Saugers durch den bevorzugten Schrittmotor ermöglicht es ferner, während des Anhebens zu beobachten, ob ein weiteres Werkstück an dem anzuhebenden Werkstück anhaftet und ggf. sofort Gegenmaßnahmen einzuleiten, beispielsweise die Unterdruckleistung abzusenken oder eine stärkere Biegung des Werkstücks vorzusehen.

Ferner ist es möglich, dass mehrere Sauger derart gegenläufig gesteuert werden, dass sich eine Art Wellenbewegung ergibt. So können aneinander anschließende Sauger in einer festen oder variablen Phasenbeziehung zueinander periodisch oder nicht-periodisch auf und abbewegt werden, um eine solche Wellenbewegung zu erzeugen. Durch die daraus resultierende Relativbewegung lassen sich die Platten noch leichter lösen. Diese bevorzugte Ansteuerung der Sauger führt bevorzugt auch dazu, dass die Unterdruckleistung für die einzelnen Sauger an die Bewegung der Sauger angepasst wird, d.h. die Unterdruckquelle bei einer höheren oder niedrigeren minimalen Unterdruckleistung entsprechend geregelt wird.

Beim einzelnen, insbesondere quasi stufenlosen, Anheben eines Saugers steigt die Belastung des Saugers, das heißt einerseits die durch ihn auszuübende Hubkraft und damit andererseits auch das benötigte Vakuum und die hierfür erforderliche Unterdruckleistung zur Erzeugung des Vakuums. Durch den Regelkreis kann beispielsweise in Abhängigkeit des Bewegungsverlaufes der einzelnen Sauger und alternativ oder zusätzlich durch Interpretieren der Hubkraft einzelner Sauger eine Anpassung der jeweiligen Unterdruckleistung erfolgen.

In einer weiter bevorzugten Ausführungsform ist der Regelkreis dazu ausgestaltet, die geregelte Unterdruckleistung und/oder die angelegte Kraft jeweils mit einem oder mehreren Bezugswerten zu vergleichen, um ein unbeabsichtigtes Anheben, insbesondere ein Anheben von zwei oder mehr Werkstücken, zu erkennen. Der Regelkreis kann also sowohl die geregelte Unterdruckleistung als auch die angelegte Kraft oder alternativ eine dieser beiden Größen mit einem Sollwert vergleichen, der bei der Bewertung der Handhabungssituation in Bezug auf die Zahl der angehobenen Werkstücke unterstützen kann.

Hierdurch kann bereits frühzeitig und ohne das vollständige Anheben des Werkstücks erkannt werden, ob ein oder mehrere Werkstücke angehoben werden und die Unterdruckleistung ggf. soweit reduziert werden, bis nur noch das anzuhebende Werkstück an der Handhabungsvorrichtung anhaftet. Das Lösen der Werkstücke kann beispielsweise durch einen Sprung in der Belastungsmessung des Saugers, beispielsweise also in der gemessenen Hubkraft oder dem gemessenen Unterdruck in Abhängigkeit der bereitgestellten Unterdruckleistung erkannt werden. Nach erzieltem, insbesondere lokalem Trennerfolg, das heißt, wenn nur noch das anzuhebende Werkstück durch den Sauger gehalten wird, kann die Unterdruckleistung zur Erhöhung der Kontaktkraft zwischen dem Sauger und dem Werkstück wieder erhöht werden, was für jeden Sauger einzeln, gruppenweise für mehrere Sauger oder insgesamt erfolgen kann, um ein sicheres Transportieren des Werkstücks zu ermöglichen.

In einer weiteren Ausführungsform umfasst die Unterdruckquelle eine Treibmittelvakuumpumpe, insbesondere einen Ejektor, der bevorzugt am Sauger angebracht ist. Durch eine derartige Unterdruckquelle ist es besonders gut möglich, die Unterdruckleistung zur Erzeugung des Unterdrucks in dem Sauger stufenlos einzustellen und schnell an die sich verändernden Bedürfnisse am Sauger anzupassen. Alternativ sind jedoch auch andere Unterdruckquellen denkbar, wie etwa eine andersartige Unterdruckpumpe oder ein mit einem Ventil gekoppeltes Unterdruckreservoir.

Ein erfindungsgemäßes Verfahren zum Anheben eines plattenförmigen Werkstücks, welches bevorzugt zumindest abschnittsweise aus Holz, Holzwerkstoffen oder Kunststoff besteht, das insbesondere eine Vorrichtung gemäß der vorherigen Beschreibung verwendet, umfasst ein Anlegen eines Saugers an das Werkstück, ein Bereitstellen einer Unterdruckleistung zur Erzeugung eines Unterdrucks in dem Sauger zum Ansaugen des Werkstücks, ein Messen des Unterdrucks in dem Sauger und ein Regeln der Unterdruckleistung in Abhängigkeit des gemessenen Unterdrucks, so dass mindestens ein minimaler zum Anheben des Werkstücks ausreichender Unterdruck in dem Sauger erzeugt wird. Die Unterdruckleistung kann auch so geregelt werden, dass ein etwas höherer als der minimale zum Anheben des Werkstücks ausreichende Unterdruck in dem Sauger erzeugt wird, indem beispielsweise eine um 10% erhöhte Unterdruckleistung eingestellt wird, um das Werkstück besonders sicher zu halten.

Durch das gezielte Optimieren der Unterdruckleistung hinsichtlich des minimalen zum Anheben des Werkstücks ausreichenden und erforderlichen Unterdrucks in dem Sauger kann der Durchsaugeffekt und können damit die Haftkräfte darunter befindlicher Werkstücke an dem anzuhebenden Werkstück minimiert und idealerweise verhindert werden.

Das Verfahren umfasst ferner ein Messen einer Hubkraft, die durch den Sauger an das Werkstück angelegt wird, wobei die gemessene Hubkraft beim Regeln der Unterdruckleistung berücksichtigt wird. Somit kann bei einem schwereren Werkstück oder einer lokalen Erhöhung der Hubkraft eines einzelnen Saugers eine Anpassung der Unterdruckleistung an die erhöhte Kraft stattfinden.

Der erforderliche Unterdruck kann dabei insbesondere im Fall von nicht-durchsaugenden, beispielsweise also lackierten oder anderweitig im Wesentlichen luftdicht beschichteten oder aus luftdichtem Material hergestellten Werkstücken, anhand der gemessenen Hubkraft bestimmt werden. Es kann auch mit einem Erfahrungswert für den erforderlichen Unterdruck begonnen, die Hubkraft ermittelt und anschließend eine Anpassung des Unterdrucks durchgeführt werden.

Mit Vorteil wird die Unterdruckleistung und/oder die Hubkraft jeweils mit einem oder mehreren Bezugswerten verglichen, um ein unbeabsichtigtes Anheben, insbesondere ein Anheben von zwei oder mehr Werkstücken, zu erkennen. Wie bereits zuvor beschrieben wurde, ermöglicht das Vergleichen der genannten Parameter mit einem Bezugswert, insbesondere also einem Sollwert oder Sollbereich ein direktes Erkennen, ob ein oder mehrere Werkstücke angehoben werden. Beispielsweise kann die Unterdruckleistung reduziert werden, wenn sie und/oder die Hubkraft deutlich oberhalb eines Sollwertes für ein anzuhebendes Werkstück liegt, da es in diesem Fall wahrscheinlich ist, dass gerade mehrere Werkstücke angehoben werden.

Mit Vorteil wird die Unterdruckleistung durch ein Einstellen eines Ventils oder eines Betriebsdrucks einer Treibmittelvakuumpumpe, insbesondere eines Ejektors, geregelt. Diese Auswahl ermöglicht ein besonders schnelles und flexibles Reagieren der Unterdruckquelle auf die durch den Regelkreis vorgegebene Unterdruckleistung, so dass das Verfahren besonders effizient durchgeführt werden kann.

Ein erfindungsgemäßes Computerprogramm bringt einen Computer dazu, eine Unterdruckleistung einer Unterdruckquelle gemäß einem der zuvor beschriebenen Verfahren zu regeln. Ein Computerprogramm ermöglicht eine besonders schnelle Realisierung des erfindungsgemäßen Verfahrens und bietet dem Anmelder viele Möglichkeiten, Sollwerte einzugeben oder andere Parameter zu verändern, so dass das Verfahren sehr flexibel bleibt.

Insbesondere im Fall von mehreren Saugern und Druck- und Kraftmessern kann durch die erfindungsgemäße Handhabungsvorrichtung und das dazu gehörige Verfahren eine Summenbildung der Hubkräfte der einzelnen Sauger vorgenommen und dadurch auf die gesamte anzuhebende Masse geschlossen werden. Dies ermöglicht es, einen Gesamtgewichtssensor einzusparen. Darüber hinaus kann das Gesamtgewicht durch die Verwendung von vielen Messvorrichtungen genauer bestimmt werden. Wegen des Wegfalls der sich üblicherweise einstellenden Schwingung des Gesamtsystems kann ferner schneller ein Messergebnis erzielt werden, so dass die Vorrichtung und das Verfahren effizienter werden.

Die nachfolgende Figurenbeschreibung und die Gesamtheit der Ansprüche zeigen weitere Ausführungsformen und Vorteile der Erfindung auf.

### KURZE FIGURENBESCHREIBUNG

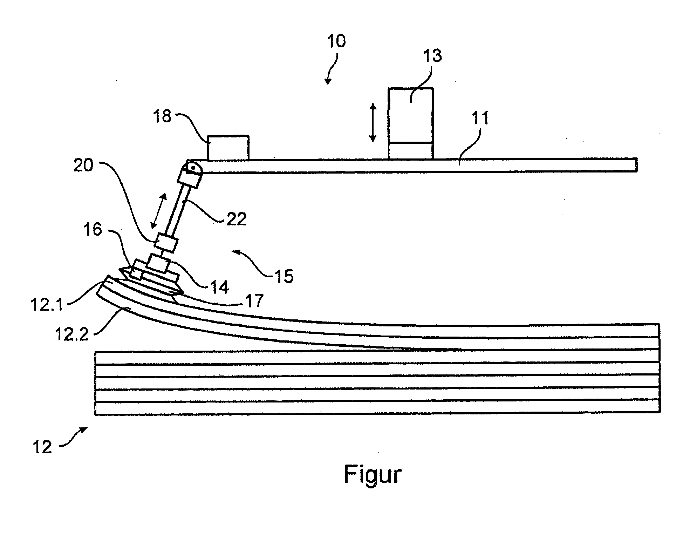

Die beiliegende Figur zeigt eine schematische Seitenansicht einer Handhabungsvorrichtung gemäß der Erfindung.

### WEGE ZUR AUSFÜHRUNG DER ERFINDUNG

Die Figur zeigt eine Handhabungsvorrichtung 10 zum Anheben eines plattenförmigen Werkstücks 12.1 in einer schematischen Seitenansicht. Die Handhabungsvorrichtung 10 umfasst eine Traverse 11, die durch einen Antrieb 13 vertikal beweglich angebracht ist. An der Traverse 11 befindet sich ein Sauger 15, der dazu ausgestaltet ist, ein plattenförmiges Werkstück 12.1 aufzunehmen und somit eine Verbindung zwischen der Traverse 11 und dem Werkstück 12.1 bilden kann.

Der Sauger 15 weist eine Dichtmanschette 17 auf, mit der der Sauger in luftdichten Kontakt mit dem Werkstück 12.1 gelangen kann und innerhalb derer ein Unterdruck, nämlich der Unterdruck in dem Sauger 15, erzeugt werden kann. Zur Erzeugung des Unterdrucks weist die Handhabungsvorrichtung 10 eine Unterdruckquelle 14 auf, die beispielsweise an dem Sauger 15 selbst gelagert sein kann. Für die Unterdruckquelle 14 lassen sich jedoch auch andere Standorte nutzen, beispielsweise kann die Unterdruckquelle auch außerhalb der Handhabungsvorrichtung 10 oder auf der Traverse 11 angeordnet sein.

Insgesamt kann die Handhabungsvorrichtung 10 eine oder mehrere Traversen 11 und an jeder Traverse einen oder mehrere Sauger 15 umfassen. Bevorzugt können diese Sauger 15 auch einzeln oder gruppenweise zum Handhaben eines bestimmten Werkstücks verwendet werden. Ferner können bei mehreren Saugern 15 die Sensoren, also die Druckmesser und die Kraftmesser gruppenweise verwendet werden. Es kann beispielsweise jeweils eine bestimmte Anzahl von Sensoren oder nur ein Sensor für eine Gruppe von Saugern 15 eingesetzt werden.

An dem Sauger 15 befindet sich ein Druckmesser 16, der in der gezeigten Ausführungsform innerhalb der Dichtmanschette 17 angeordnet ist und den Unterdruck in dem Sauger 15 messen kann. Alternativ zu dieser Anordnung ist es auch möglich, dass der Druckmesser 16 beispielsweise an einer Leitung zwischen der Unterdruckquelle 14 und dem eigentlichen Vakuumraum des Saugers 15, in der hier dargestellten Ausführungsform also dem Innenraum der Dichtmanschette 17, angeordnet ist. Durch Messen des Drucks in einer solchen Leitung könnte dann hinreichend genau auch auf den Druck in dem Sauger geschlossen werden.

Ferner befindet sich an dem Sauger 15 ein Kraftmesser 20, der die Hubkraft, die durch den Sauger 15 an das Werkstück 12.1 angelegt wird, messen kann.

Der Sauger 15 umfasst in der vorliegenden Ausführungsform des Weiteren einen Schrittmotor 22, der dazu ausgestaltet ist, den Sauger quasi stufenlos zu bewegen. Der Schrittmotor 22 ist derart an der Traverse 11 angebracht, dass der Sauger 15 über den Schrittmotor 22 stufenlos gegenüber der Traverse 11 in seiner Höhe verändert werden kann. Das Werkstück 12.1, das jeweils an einer Stelle an einem Sauger 15 hängt, kann daher bei verschiedenen einzeln beweglichen Saugern an verschiedenen Stellen unterschiedlich angehoben werden.

Beispielsweise an der Traverse 11 ist ein Regelkreis 18 angeordnet, der die Daten des Druckmessers 16 und des Kraftmessers 20 auswertet und somit die Unterdruckleistung der Unterdruckquelle 14 regelt, so dass mindestens ein minimaler zum Anheben des Werkstücks ausreichender Unterdruck in dem Sauger 15 erzeugt wird.

Die Figur zeigt eine Situation, in der durch die Handhabungsvorrichtung 10 mittels des Saugers 15 zwei Werkstücke 12.1, 12.2 von einem Werkstückstapel 12 lokal angehoben werden. Der Kraftmesser 20 registriert dabei über die gemessene Hubkraft, dass das Gewicht, welches durch den Sauger 15 getragen wird, größer ist als das erwartete Gewicht, dass sich beim Anheben eines einzigen Werkstücks 12.1 ergeben würde.

Die von dem Kraftmesser 20 gemessene Hubkraft des Saugers 15 wird an den Regelkreis 18 übermittelt und der Druckmesser 16 übermittelt den im Sauger 15 vorherrschenden Unterdruck ebenfalls an den Regelkreis 18. Der Regelkreis 18 erkennt dabei, dass zwei Werkstücke 12.1, 12.2 angehoben werden und reduziert die Unterdruckleistung der Unterdruckquelle 14. Auf diese Weise wird weniger Luft durch das erste Werkstück 12.1 durchgesaugt und die Haftkraft, mit der das zweite Werkstück 12.2 an dem ersten Werkstück 12.1 anhaftet, reduziert.

Bei einer solchen Reduzierung der Haftkraft, mit der das zweite Werkstück 12.2 an dem ersten Werkstück 12.1 anhaftet, überschreitet die Gewichtskraft des zweiten Werkstück 12.2 die Haftkraft in Bezug auf das erste Werkstück 12.1. Dies führt dann zur Trennung zwischen dem ersten Werkstück 12.1 und dem zweiten Werkstück 12.2.

Das Sich Lösen des zweiten Werkstücks 12.2 von dem ersten Werkstück 12.1 wird durch den Kraftmesser 20 durch einen Sprung der Hubkraft des Saugers 15 registriert und an den Regelkreis 18 übermittelt. Dieser kann nun die Unterdruckquelle 14 zur Erhöhung der Unterdruckleistung anweisen, um die Haltekraft des ersten Werkstücks 12.1 an dem Sauger 15 wieder zu erhöhen und damit zu einer verbesserten Handhabung des Werkstücks 12.1 beizutragen.

Auch ohne Kraftmesser 20 kann durch die Signale des Druckmessers 16 durch den Regelkreis 18 bestimmt werden, ob ein oder zwei Werkstücke an dem Sauger 15 anhaften. Diese Information ergibt sich beispielsweise aus der benötigten Unterdruckleistung zur Herstellung eines durch den Druckmesser 16 gemessenen Unterdrucks in dem Sauger 15. Bei bekannten Materialeigenschaften kann ein bestimmtes Verhältnis zwischen Unterdruckleistung und erzieltem Unterdruck bestimmt und durch den Druckmesser 16 überprüft werden. Durch den Regelkreis 18 kann dann erkannt werden, ob ein Werkstück der vordefinierten Eigenschaften, insbesondere also einer vorgeschriebenen Dicke, durch den Sauger 15 kontaktiert wird oder ob die Unterdruckeigenschaften den Rückschluss auf mehrere Werkstücke zulassen.

Die Figur zeigt eine Situation, in welcher der dargestellte Sauger 15 durch den Schrittmotor 22 gegenüber anderen (nicht gezeigten) Saugern stärker angehoben ist. Dies führt zu einem Durchbiegen des Werkstücks 12.1, 12.2 vom Rand des Werkstückstapels 12 zu seiner Mitte hin. Dieses Verfahren zum Abheben des Werkstücks 12.1 vom Werkstückstapel 12 verringert bereits das Anhaften des Werkstücks 12.1 an dem darunterliegenden Werkstück 12.2, da die Haftkraft zwischen dem ersten Werkstück 12.1 und dem zweiten Werkstück 12.2 durch die Biegeverformung der Werkstücke reduziert und die durch die Biegeverformung erzeugte Gegenkraft erhöht wird.

Durch die Biegeverformung der Werkstücke 12.1, 12.2 entsteht jedoch auch eine größere Belastung für den Sauger 15, die eine erhöhte Unterdruckleistung durch die Unterdruckquelle 14 erfordert, um das Werkstück 12.1 durch den Sauger 15 festhalten zu können. Dieser Effekt wird durch den Regelkreis 18 berücksichtigt, der bevorzugt mehrere Sauger 15 koordiniert regelt. Alternativ ist es auch möglich, mehrere Regelkreise vorzusehen, beispielsweise jeweils ein Regelkreis pro Sauger oder ein Regelkreis für eine kleine Gruppe von Saugern.

Durch die erfindungsgemäße Handhabungsvorrichtung ist es möglich, plattenförmige Werkstücken besonders sicher und zuverlässig von einem Werkstückstapel anzuheben und weiterzutransportieren.

## Patentansprüche

1. Handhabungsvorrichtung (10) zum Anheben eines plattenförmigen Werkstücks (12.1), welches zumindest abschnittsweise aus Holz, Holzwerkstoffen oder Kunststoff besteht, umfassend:
zumindest einen Sauger (15), der zum Ansaugen und Anheben des Werkstücks (12.1) ausgestaltet ist,
zumindest eine Unterdruckquelle (14), die durch Bereitstellen einer Unterdruckleistung einen Unterdruck in dem Sauger (15) zum Ansaugen des Werkstücks (12.1) erzeugt, und
zumindest einen Druckmesser (16) zum Messen des
Unterdrucks in dem Sauger (15),
und einen Kraftmesser (20), der dazu angeordnet und ausgestaltet ist, eine durch den Sauger (15) an das Werkstück (12.1) angelegte Hubkraft zu messen,
wobei die Handhabungsvorrichtung (10) ferner einen Regelkreis (18) umfasst,
der dazu ausgestaltet ist, die Unterdruckleistung in Abhängigkeit von dem Unterdruck in dem Sauger (15) und auch in Abhängigkeit von der Hubkraft so zu regeln,
dass mindestens ein minimaler zum Anheben des Werkstücks (12.1) ausreichender Unterdruck in dem Sauger (15) erzeugt wird.

2. Vorrichtung nach Anspruch 1, wobei der Kraftmesser (20) am Sauger (15) angebracht ist.

3. Vorrichtung nach einem der vorhergehenden Ansprüche, ferner umfassend einen Antrieb (22), bevorzugt einen Schrittmotor, der dazu angeordnet und ausgestaltet ist, den Sauger (15), insbesondere quasi stufenlos, einzeln zu bewegen,
wobei der Regelkreis (18) bevorzugt dazu ausgestaltet ist, die Unterdruckleistung auch in Abhängigkeit von der Bewegung des Saugers (15) zu regeln.

4. Vorrichtung nach einem der vorhergehenden Ansprüche, wobei der Regelkreis (18) dazu ausgestaltet ist, die geregelte Unterdruckleistung und/oder die angelegte Kraft jeweils mit einem oder mehreren Bezugswerten zu vergleichen, um ein unbeabsichtigtes Anheben, insbesondere ein Anheben von zwei oder mehr Werkstücken (12.1, 12.2), zu erkennen.

5. Vorrichtung nach einem der vorhergehenden Ansprüche, wobei die Unterdruckquelle (14) eine Treibmittelvakuumpumpe, insbesondere einen Ejektor, umfasst, der bevorzugt am Sauger (15) angebracht ist.

6. Verfahren zum Anheben eines plattenförmigen Werkstücks (12.1), welches zumindest abschnittsweise aus Holz, Holzwerkstoffen oder Kunststoff besteht, insbesondere unter Verwendung einer Vorrichtung (10) nach einem der vorhergehenden Ansprüche, das die folgenden Schritte umfasst:
Anlegen eines Saugers (15) an das Werkstück (12.1),
Bereitstellen einer Unterdruckleistung zur Erzeugung eines Unterdrucks in dem Sauger (15) zum Ansaugen des Werkstücks (12.1),
Messen des Unterdrucks in dem Sauger (15),
Regeln der Unterdruckleistung in Abhängigkeit des gemessenen Unterdrucks, so dass mindestens ein minimaler zum Anheben des Werkstücks (12.1) ausreichender Unterdruck in dem Sauger (15) erzeugt wird, und
Messen einer Hubkraft, die durch den Sauger (15) an das Werkstück (12.1) angelegt wird, wobei die gemessene Hubkraft beim Regeln der Unterdruckleistung berücksichtigt wird.

7. Verfahren nach Anspruch 6, wobei die Unterdruckleistung und/oder die Hubkraft jeweils mit einem oder mehreren Bezugswerten verglichen wird, um ein unbeabsichtigtes Anheben, insbesondere ein Anheben von zwei oder mehr Werkstücken (12.1, 12.2), zu erkennen.

8. Verfahren nach einem der Ansprüche 6 oder 7, wobei die Unterdruckleistung durch ein Einstellen eines Ventils oder eines Betriebsdrucks einer Treibmittelvakuumpumpe, insbesondere eines Ejektors, geregelt wird.

9. Computerprogramm, das einen Computer dazu bringt, eine Unterdruckleistung einer Unterdruckquelle (14) gemäß einem Verfahren nach einem der Ansprüche 6 bis 8 zu regeln.

## Claims

1. Handling device (10) for lifting a board-like workpiece (12.1) which in at least one section is made of wood, derived timber products or plastic, comprising:
- at least one suction device (15) which is designed for suction and lifting of the workpiece (12.1),
- at least one vacuum source (14) which, by providing a vacuum power, generates a vacuum in the suction device (15) for suction of the workpiece (12.1), and
- at least one pressure gauge (16) for measuring the vacuum in the suction device (15), and
- a dynamometer (20) which is arranged and designed to measure a lifting force
applied by the suction device (15) to the workpiece (12.1),
wherein the handling device (10) further comprises a regulating circuit (18) which is designed to regulate the vacuum power as a function of the vacuum in the suction device (15) and also as a function of the lifting force in such a way that at least a minimum vacuum sufficient to lift the workpiece (12.1) is generated in the suction device (15).

2. Device according to claim 1, wherein the dynamometer (20) is mounted on the suction device (15).

3. Device according to any of the preceding claims, further comprising a drive (22), preferably a stepping motor, which is arranged and designed to remove the suction device (15) individually, in particular as it were infinitely variably, wherein the regulating circuit (18) is preferably designed to regulate the vacuum power as a function of the movement of the suction device (15) as well.

4. Device according to any of the preceding claims, wherein the regulating circuit (18) is designed to compare the regulated vacuum power and/or the applied force in each case with one or more reference values, in order to detect accidental lifting, in particular lifting of two or more workpieces (12.1, 12.2).

5. Device according to any of the preceding claims, wherein the vacuum source (14) comprises a vacuum fuel pump, in particular an ejector, which is preferably mounted on the suction device (15).

6. Method for lifting a board-like workpiece (12.1) which in at least one section is made of wood, derived timber products or plastic, in particular using a device (10) according to any of the preceding claims, which comprises the following steps:
- applying a suction device (15) to the workpiece (12.1),
- providing a vacuum power for generating a vacuum in the suction device (15) for suction of the workpiece (12.1),
- measuring the vacuum in the suction device (15),
- regulating the vacuum power as a function of the measured vacuum, so that at least a minimum vacuum sufficient to lift the workpiece (12.1) is generated in the suction device (15), and
- measuring a lifting force which is applied by the suction device (15) to the workpiece (12.1), wherein the measured lifting force is taken into consideration when regulating the vacuum power.

7. Method according to claim 6, wherein the vacuum power and/or the lifting force is in each case compared with one or more reference values in order to detect accidental lifting, in particular lifting of two or more workpieces (12.1, 12.2).

8. Method according to either of claims 6 or 7, wherein the vacuum power is regulated by adjusting a valve or an operating pressure of a vacuum fuel pump, in particular an ejector.

9. Computer program which causes a computer to regulate a vacuum power of a vacuum source (14) by a method according to any of claims 6 to 8.

## Revendications

1. Dispositif de manipulation (10) pour le levage d'une pièce (12.1) en forme de plaque, laquelle est au moins partiellement en bois, en matériau ligneux ou en matière synthétique, comprenant :
au moins une ventouse (15) prévue pour la succion et le levage de la pièce (12.1),
au moins une source d'aspiration (14) générant par formation d'une puissance d'aspiration une dépression dans la ventouse (15) pour la succion de la pièce (12.1), et
au moins un manomètre (16) destiné à mesurer la dépression dans la ventouse (15),
et un dynamomètre (20), disposé et prévu pour mesurer une force de lavage appliquée par la ventouse (15) sur la pièce (12.1),
ledit dispositif de manipulation (10) comprenant en outre un circuit de régulation (18) prévu pour réguler la puissance d'aspiration en fonction de la dépression dans la ventouse (15) et également en fonction de la force de levage, de manière à générer au moins une dépression minimale dans la ventouse (15), suffisant au levage de la pièce (12.1).

2. Dispositif selon la revendication 1, où le dynamomètre (20) est disposé sur la ventouse (15).

3. Dispositif selon l'une des revendications précédentes, comprenant en outre un entraînement (22), préférentiellement un moteur pas à pas, disposé.et prévu pour déplacer individuellement la ventouse (15), en particulier pratiquement de manière continue,
le circuit de régulation (18) étant préférentiellement prévu pour réguler la puissance d'aspiration également en fonction du déplacement de la ventouse (15).

4. Dispositif selon l'une des revendications précédentes, où le circuit de régulation (18) est prévu pour comparer la puissance d'aspiration réglée et/ou la force appliquée respectivement avec une ou plusieurs valeurs de référence, pour détecter un levage accidentel, en particulier un levage de deux pièces (12.1, 12.2) ou plus.

5. Dispositif selon l'une des revendications précédentes, où la source d'aspiration (14) comprend une pompe à vide, en particulier un éjecteur, lequel est préférentiellement disposé sur la ventouse (15).

6. Procédé de levage d'une pièce (12.1) en forme de plaque, laquelle est au moins partiellement en bois, en matériau ligneux ou en matière synthétique, recourant en particulier à un dispositif (10) selon l'une des revendications précédentes, et comprenant les étapes suivantes :
application d'une ventouse (15) contre la pièce (12.1),
préparation d'une puissance d'aspiration destinée à générer une dépression dans la ventouse (15) pour la succion de la pièce (12.1),
mesure de la dépression dans la ventouse (15),
régulation de la puissance d'aspiration en fonction de la dépression mesurée, de manière à générer au moins une dépression minimale dans la ventouse (15), suffisant au levage de la pièce (12.1), et
mesure d'une force de levage appliquée par la ventouse (15) sur la pièce (12.1), la force de levage mesurée étant prise en compte pour la régulation de la puissance d'aspiration.

7. Procédé selon la revendication 6, où la puissance d'aspiration et/ou la force de levage sont comparées respectivement avec une ou plusieurs valeurs de référence, pour détecter un levage accidentel, en particulier un levage de deux pièces (12.1, 12.2) ou plus.

8. Procédé selon l'une des revendications 6 ou 7, où la puissance d'aspiration est régulée par réglage d'une soupape ou d'une pression de service d'une pompe à vide, en particulier d'un éjecteur.

9. Programme informatique entraînant un ordinateur à réguler une puissance d'aspiration d'une source d'aspiration (14) conformément à un procédé selon l'une des revendications 6 à 8.
